## Europäisches Patentamt
## European Patent Office
## Office européen des brevets

(19)

(11) Numéro de publication: **0 184 500**
**B1**

(12) # FASCICULE DE BREVET EUROPÉEN

(45) Date de publication du fascicule du brevet:
06.03.89

(21) Numéro de dépôt: 85402325.6

(22) Date de dépôt: 27.11.85

(51) Int. Cl.⁴: **G 11 B 5/55,** G 11 B 5/54,
G 05 B 19/415 //
G11B21/08

(54) Procédé pour déplacer un système mobile mu par un moteur électrique suivant une trajectoire donnée et dispositif de mise en oeuvre de ce procédé.

(30) Priorité: 29.11.84 FR 8418156

(43) Date de publication de la demande:
11.06.86 Bulletin 86/24

(45) Mention de la délivrance du brevet:
06.03.89 Bulletin 89/10

(84) Etats contractants désignés:
DE FR GB IT NL SE

(56) Documents cité:
EP-A-0 069 546
CH-A-402 120
FR-A-1 491 735
FR-A-2 172 733
US-A-3 932 796

IBM TECHNICAL DISCLOSURE BULLETIN, vol. 26, no. 3A, août 1983, pages 1244-1247, New York, US; M.J. STEEN et al.: "Two-speed cam"
IBM TECHNICAL DISCLOSURE BULLETIN, vol. 26, no. 1, juin 1983, pages 376-377, New York, US; W.P. QUINLAN et al.: "Bidirectional dual-velocity accessing for a disk drive"
IBM TECHNICAL DISCLOSURE BULLETIN, vol. 22, no. 6, novembre 1979, pages 2501-2504, New York, US; M.H. BOSIER: "Door opening mechanism for magnetic disk cartridge"

(73) Titulaire: BULL S.A., 121, Avenue de Malakoff, F-75116 Paris (FR)

(72) Inventeur: Carteau, Daniel, 16 rue des Myosotis, F-91470 Limours (FR)
Inventeur: Couette, Jean- Jacques, 13, rue Louis Antoine de Bougainville, F-78180 Montigny Le Bretoneux (FR)
Inventeur: Maury, Christian, 10, rue Farman, F-78190 Voisin le Bretonneux (FR)
Inventeur: Pham, Dan, 1 Square Edmond Barbanson, F-92220 Bagneux (FR)

(74) Mandataire: Gouesmel, Daniel, BULL S.A. Industrial Property Department 25 avenue de la Grande- Armée GA- 4X018, F-75016 Paris (FR)

## Description

L'invention concerne un procédé pour déplacer un système mobile mu par un moteur électrique suivant une trajectoire donnée et son dispositif de mise en oeuvre. Elle est plus particulièrement applicable au systèmes de déplacement et de chargement de têtes comportant les transducteurs de lecture écriture des disques magnétiques d'une mémoire à disques.

On sait que, dans les mémoires à disques magnétiques, les informations sont écrites (ou lues) sur des pistes concentriques circulaires par des transducteurs de lecture/écriture qui sont disposés à très faible distance de chacune des faces des disques et qui peuvent se déplacer au-dessus, de celles-ci de manière à écrire (ou lire) l'ensemble des pistes contenues sur chacune des faces. Lors de ces opérations d'écriture et de lecture, les disques ont une vitesse de rotation constante.

A chaque face d'un disque magnétique, est associé, le plus souvent un seul transducteur d'écriture/lecture. Pour que ce transducteur puisse écrire ou lire n'importe quelle information contenue sur la face qui lui est associée, il est disposé sur une plate-forme qui est déplacée parallèlement à la face du disque au moyen d'un moteur électrodynamique linéaire ou rotatif.

La plate-forme elle-même se compose de deux parties essentielles, à savoir d'une part, une partie appelée tête qui comprend les transducteurs et d'autre part un dispositif de suspension dont une extrémité est solidaire de la tête et l'autre extrémité solidaire d'un bras rigide solidaire de la partie mobile du moteur électrodynamique.

Généralement, la tête comportant le(s) transducteur(s) de lecture/écriture d'une face d'un disque a la forme d'un parallélépipède rectangle relativement plat dont la face inférieure disposée en regard du disque comporte le transducteur. La grande face supérieure parallèle à la précédente contient les extrémités des fils électriques d'entrée et/ou sortie du transducteur et les moyens permettant de connecter ces fils aux circuits électroniques de lecture et/ou écriture de la mémoire à disques.

Une plate-forme de ce genre est décrite dans le brevet français N° 2 426 943 déposée le 26 Mai 1978 sous le titre "Plate-forme d'au moins un transducteur de lecture et/ou d'enregistrement d'un support d'informations".

La rotation du disque provoque l'existence entre la face inférieure de la tête de la plate-forme et la face du disque associée au transducteur de celle-ci, d'un coussin d'air comprimé qui empêche la tête de toucher le disque et par suite de le détériorer. On dit alors que la tête vole au-dessus de la face du disque qui lui est associée. Dans ces conditions, la distance entre la face du disque et la face inférieure de la tête est appelée "hauteur de vol" h. Il est à noter que la tête est également appelée patin de vol dans la pratique courante.

L'équilibre dynamique de la plate-forme en vol est obtenu en opposant à la force de pression créée par le coussin d'air sur la surface de la face inférieure de la plate-forme une force dite "charge" dirigée en sens inverse, appliquée sur la face supérieure de la tête et de module égal à celui de la force de pression.

La charge est relativement faible, de l'ordre de 10 à 15 grammes. Elle est fournie par une lame de charge solidaire du bras amovible rigide.

Un problème délicat à résoudre est celui de la mise en vol de la tête. En effet, lorsque la mémoire à disques ne fonctionne pas, la tête se trouve dans une position située au voisinage de la périphérie du disque à l'extérieur de celui-ci, appelée "position de repos" pour laquelle la distance H entre la face inférieure de la tête et le plan contenant la face du disque associée à la tête, est de l'ordre de quelques dixièmes de millimètres. Pour permettre la mise en vol de la tête, il convient donc de la déplacer depuis sa position de repos à l'extérieur du disque jusqu'à la position où elle est abaissée vers le disque en position de vol stable, à une hauteur h de quelques dixièmes de microns au-dessus de la surface du disque.

La mise en vol est délicate en raison principalement des turbulences de l'air au voisinage de la surface du disque.

En d'autres termes, mettre en vol la tête consiste à déplacer, celle-ci d'une position où sa distance par rapport au disque est H, jusqu'à une position où où on effectue son chargement de telle sorte qu'elle vole de façon stable au-dessus de la surface du disque, sa distance par rapport à ce dernier étant alors h inférieure à H.

Dans la pratique courante, on utilise de plus en plus fréquemment des systèmes de déplacement de chargement de têtes comprenant un positionneur rotatif (bras rotatif), solidaire de la partie mobile d'un moteur électrodynamique rotatif et un dispositif de montée/descente des têtes permettant soit d'abaisser la tête vers le disque en position de vol, soit de remonter la tête de sa position de vol à sa position de repos. Un tel système est par exemple décrit dans la demande de brevet française N° 82.04349 déposée le 15 Mars 1982 par la Compagnie Internationale pour l'Informatique CII Honeywell Bull sous le titre "Dispositif de chargement de corps principal de plate-forme comportant au moins un transducteur de lecture/écriture d'un support d'informations".

Dans un tel système de déplacement et de chargement de têtes, le positionneur est monté sur roulements à billes. La charge de chaque tête est fournie, ainsi qu'il a été mentionné plus haut, par une lame de charge s'articulant par l'une de ses extrémités à un bras solidaire du positionneur rotatif et portant à son autre extrémité un dispositif de suspension de la tête. Cette lame est elle-même reliée mécaniquement à un fil sur lequel s'appuie un poussoir monté à l'extrémité d'une lame-ressort articulée sur le bras solidaire du positionneur. Le poussoir est en contact avec

le profil d'une came fixe. Dans un mode de réalisation préféré le profil de cette came comprend deux points de rupture de pente le divisant ainsi en trois parties distinctes.

Le déplacement et le chargement d'une tête s'effectue en trois phases successives, chaque phase correspondant à une position du poussoir sur l'une des trois parties du profil de la came. Ces trois phases sont les suivantes:

- Phase 1. Lorsque le poussoir est en contact avec la première partie du profil de la came, le positionneur rotatif d'abord immobilisé est ensuite libéré. Cette phase est dite phase de déverrouillage;

- Phase 2. Le positionneur ayant été déverrouillé, le poussoir est alors en contact avec la partie centrale du profil de la came. Lorsque le poussoir se déplace le long de cette partie centrale, le positionneur rotatif effectue une rotation qui amène la tête d'une position située à l'extérieur du disque à une position située au-dessus du disque, à la périphérie de celui-ci, la hauteur de la tête par rapport au plan du disque étant toujours égale à H;

- Phase 3. Durant cette phase, le poussoir se déplace le long de la troisième partie du profil de la came. L'effort de traction exercée par le poussoir sur la lame de charge diminue progressivement de telle sorte que celle-ci s'abaisse progressivement vers le disque. Elle entraîne de ce fait la tête vers ce dernier, de manière à ce que, lorsque le poussoir arrive en fin de course sur cette troisième partie, la tête se trouve en position de vol stable au-dessus du disque à la hauteur de vol h. Dès que la tête a atteint sa position de vol stable au-dessus du disque, on dit que la tête est chargée. Dans ces conditions, le poussoir n'est plus en contact avec le profil de la came. Cette troisième phase qui est donc celle de la mise en position de vol stable au-dessus du disque et donc celle du chargement de la tête proprement dit.

Il est clair que, réciproquement, c'est-à-dire pour décharger la tête et la ramener en position de repos, les opérations se déroulent exactement d'une manière inverse à celles des opérations de chargement. La première phase (correspondant à la phase de chargement lors de la mise en vol) s'appelle alors "phase de déchargement".

Au vu de ce qui précède, on voit que l'on peut assimiler le système de déplacement et de chargement de tête à un système mobile qui se déplace le long d'une trajectoire donnée constituée par les trois parties du profil de la came. Pour simplifier le raisonnement, on assimilera, par la suite, le système mobile constitué par le système de déplacement et de chargement de têtes, à un mobile constitué par le poussoir se déplaçant le long du profil de la came et ayant même masse et même inertie que le système de déplacement et de chargement de têtes.

Pour une même mémoire à disques, en passant d'un parcours de la trajectoire effectué par le mobile à un autre, on constate que les efforts résistants provoqués par les forces de frottement qui s'opposent au mouvement du mobile le long du profil de la came peuvent varier, dans une proportion de 50 %: ainsi, ces forces de frottement peuvent varier de 10 à 15 grammes d'un parcours à l'autre pour une même machine. Des constatations analogues peuvent être faites pour des mémoires à disques différentes. Ces variations sont dues essentiellement aux variations des conditions d'environnement température, hygrométrie, taux d'électricité statique dans l'air etc....

Lors du déplacement du mobile le long du profil de la came, il y a lieu de résoudre les principaux problèmes suivants dus essentiellement à ces variations:

1. Lors de la phase de déverrouillage du mobile, c'est-à-dire lorsqu'il doit quitter la première partie du profil de la came pour passer sur la seconde partie, en franchissant le premier point de rupture de pente, il convient de vérifier que ce premier point a été effectivement franchi. En effet, en raison des variations possibles de forces de frottement d'un parcours effectué par le mobile à un autre, la probabilité existe que, dans les mêmes conditions de fonctionnement du moteur électrodynamique (même courant et même tension d'alimentation) le premier point de rupture de pente soit franchi lors d'un parcours et ne le soit pas dans l'autre (dans ce dernier cas, il convient de modifier les conditions de fonctionnement du moteur).

2. Lorsque le mobile se déplace sur la seconde partie du profil, il convient que le mobile passe au second point de rupture de pente avec une vitesse comprise entre deux valeurs prédéterminées. En effet, si la vitesse du mobile est inférieure à une première valeur prédéterminée, le risque existe d'un retour en arrière du mobile. D'autre part, si la vitesse du mobile au second point de rupture de pente est supérieure à une seconde valeur prédéterminée plus grande que la première, le risque existe que l'énergie du mobile soit telle que, lors du chargement de la tête, la vitesse de celle-ci soit trop grande. Dans ces conditions, la probabilité existe que la tête vienne heurter le disque provoquant alors un endommagement aussi bien du disque que de la tête elle-même.

3. Dans la troisième partie, au moment du chargement de la tête sur le disque, le mobile doit avor une vitesse comprise entre deux valeurs déterminées (par exemple entre 8 et 16 mm par seconde). En effet, si la vitesse est trop grande, le risque existe que la tête vienne percuter le disque et si la vitesse est trop faible, le mobile est animé d'un mouvement d'oscillation pouvant, lui aussi, entraîner le choc de la tête sur le disque.

Dans cette troisième partie, on doit donc déplacer le mobile en contrôlant sa vitesse alors que celui-ci, à partir du franchissement du second point de rupture de pente est soumis brusquement à une force motrice due à la réaction de la came sur le poussoir tendant à provoquer une accélération brutale de celui-ci. On montre que cette force motrice est une fonction décroissante de la distance du mobile par rapport au second point de rupture.

La présente invention concerne un procédé pour déplacer le système mobile constitué par le système de chargement de têtes sur une trajectoire constituée par la troisième partie du profil de la came, de telle façon que le mobile ait, au point de destination, c'est-à-dire au point où la tête est chargée, une vitesse comprise entre deux valeurs prédéterminées. Les forces de frottement auxquelles est soumis le mobile restent constantes pour un même parcours, mais peuvent varier d'un parcours à l'autre et d'une mémoire à disque à l'autre. En outre, le mobile est soumis, suivant cette trajectoire, à une force motrice décroissant en fonction de sa distance par rapport au second point de rupture de pente.

Le procédé consistant à déplacer le mobile le long de la seconde partie du profil de la came entre les deux points de rupture de pente, de telle façon que ce dernier ait une vitesse comprise entre deux valeurs prédéterminées en franchissant le second point de rupture de pente est décrit et revendiqué dans une demande de brevet déposée conjointement à celle-ci par la Compagnie demanderesse.

Le procédé selon l'invention consiste à immobiliser d'abord le mobile (c'est-à-dire à lui donner une vitesse de référence nulle) au moyen d'un courant de freinage envoyé dans l'induit du moteur puis à le remettre en mouvement en contrôlant sa vitesse, suivant une loi telle que le mobile arrive au point de destination avec une vitesse comprise entre les deux valeurs prédéterminées.

Selon l'invention, le procédé pour déplacer un système mobile solidaire d'un moteur électrique suivant une trajectoire donnée, d'un point de départ où la vitesse est quelconque à un point de destination donné de celle-ci, en étant soumis d'une part à une force motrice dont l'intensité décroit en fonction de la distance du système par rapport au point de départ, et d'autre part à des efforts résistants constants pendant la durée d'un même déplacement le long de la trajectoire mais pouvant varier sensiblement d'un parcours de la trajectoire à l'autre, est caractérisé en ce que, dans le but de conduire le système mobile au point de destination où la vitesse est comprise entre deux valeurs prédéterminées:

1. On envoie un courant de commande dans le moteur de manière à donner une vitesse de référence déterminée au système mobile,

2. On contrôle ensuite la vitesse du mobile par envoi d'un courant dans le moteur décroissant (en valeur absolue) à partir de la valeur du courant de commande suivant une loi telle que le mobile arrive au point de destination avec une vitesse comprise entre les deux valeurs prédéterminées.

De préférence, le courant de commande est un courant de freinage permettant d'obtenir une vitesse de référence nulle.

Lorsque le moteur est électrodynamique, l'immobilisation du système est obtenue de préférence par envoi dans l'induit du moteur d'une impulsion de courant dont le sens permet au moteur d'exercer un effort résistant de sens opposé à la force motrice et dont l'intensité est fonction de l'intensité de la force motrice lorsque le système mobile est immobilisé. Sa durée est fonction de celle du régime transitoire nécessaire à l'immobilisation du système mobile.

La décroissance du courant dans le moteur permettant la remise en mouvement s'effectue par paliers successifs jusqu'à une valeur nulle, la décroissance moyenne étant linéaire.

La présente invention apparaît à la lecture de la description suivante, donnée à titre d'exemple, purement illustratifs et nullement limitatifs, en référence aux dessins annexés sur lesquels:

- la figure 1: composée des figures 1A et 1B, montre la disposition relative du moteur électrodynamique linéaire, du système de déplacement et de chargement de têtes de la came, et du disque, dans les deux cas suivants:
  - lorsque la tête n'est pas chargée (n'est pas en position de vol, au-dessus du disque (figure 1A),
  - lorsque la tête est chargée (en position de vol au-dessus du disque, (figure 1B).
- la figure 2: composée des figures 2A et 2B est une vue de profil simplifiée montrant la position relative de la tête et du disque:
  - lorsque la tête n'est pas chargée (figure 2A);
  - lorsque la tête est chargée (figure 2B).
- la figure 3: est une vue de profil en perspective montrant le détail d'une partie du système de déplacement et de chargement de tête;
- la figure 4: est une vue détaillée de la came montrant son profil en trois parties avec deux points de rupture de pente;
- la figure 5: composée des figures 5A, 5B et 5C montre, l'évolution du courant I dans le moteur électrodynamique linéaire, lors du déplacement du système de déplacement et de chargement (du mobile) le long de la came;
  - la figure 5A: montrant l'évolution du courant dans le moteur lors du déverrouillage du système de déplacement et de chargement,
  - la figure 5B: montrant l'évolution du courant dans le moteur lorsque le système de déplacement et de chargement (le mobile) se déplace le long de la came entre les deux points de rupture de pente, selon le procédé selon l'invention;
  - la figure 5C: montre l'évolution du courant dans le moteur, à partir du moment où le système de déplacement et de chargement a franchi le second point de rupture de pente et se déplace vers le point où la tête atterrit sur le disque, selon le premier procédé de l'invention;
- la figure 6: montre comment est établie expérimentalement la durée du courant de freinage dans le moteur, à partir du moment où le système de déplacement et de chargement a franchi le second point de rupture de pente;

- la figure 7: est un schéma fonctionnel du dispositif pour déplacer le système de chargement des têtes permettant donc la mise en oeuvre du procédé selon l'invention;
- la figure 8: montre l'algorithme de fonctionnement du dispositif montré à la figure 7.

Afin de mieux comprendre le procédé selon l'invention, il est utile de rappeler comment est constitué un système de déplacement et de chargement de tête et comment il fonctionne.

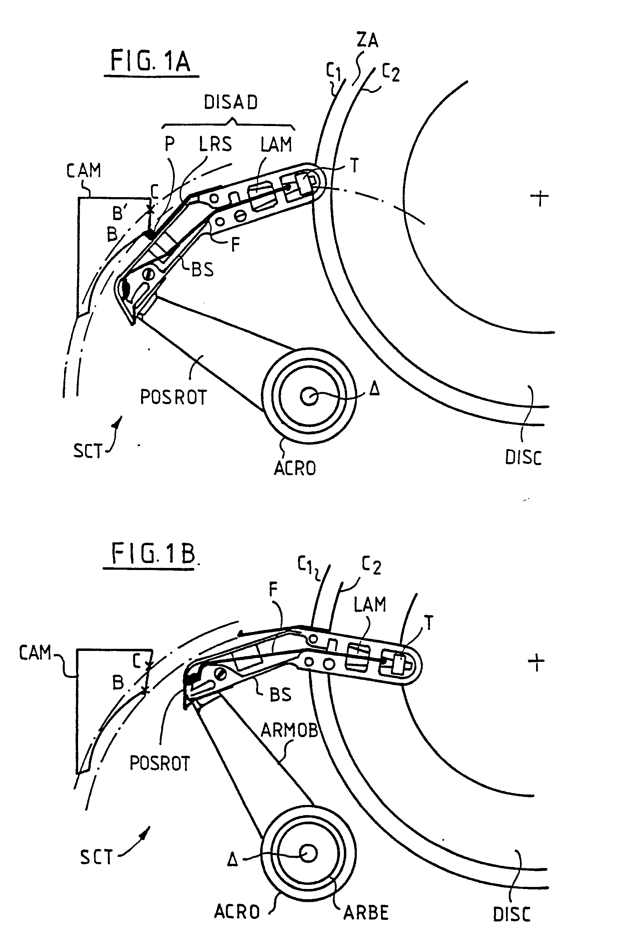

On considèrera, pour ce faire, les figures 1, 2, 3, 4.

Le système de déplacement et de chargement de tête SCT comprend, ainsi qu'on peut le voir sur ces mêmes figures,
- un positionneur rotatif POSROT solidaire mécaniquement de l'arbre d'entraînement ARBE d'un moteur électrodynamique rotatif ACRO,
- un dispositif de chargement/déchargement de la tête T, à savoir DISAD,
- la came fixe CAM.

L'actionneur rotatif ACRO a un axe de rotation.

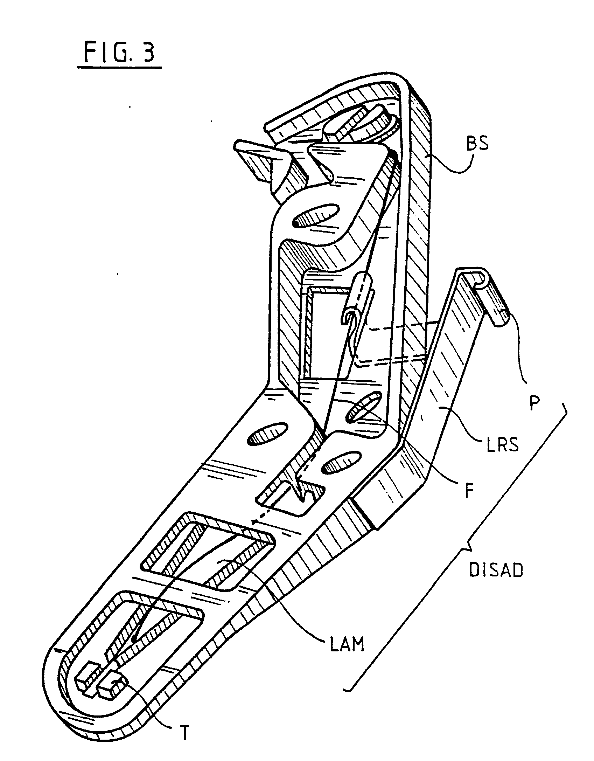

Le positionneur rotatif POSROT comprend d'une part une armature métallique ARMOB réalisée en un métal léger, et d'autre part le bras support BS (qu'on voit plus en détail représenté en perspective à la figure 3) qui porte le dispositif DISAD.

Le dispositif DISAD comprend:
- la lame de charge LAM de la tête T à laquelle est lié mécaniquement un dispositif de suspension de la tête T, non visible à la figure 3,
- le fil F en contact avec la lame ressort LRS. Cette dernière est munie en son extrémité d'un poussoir P et elle est fixée sur le bras support BS.

Le dispositif DISAD est commandé par la came fixe CAM avec laquelle il est en contact par l'intermédiaire du poussoir P.

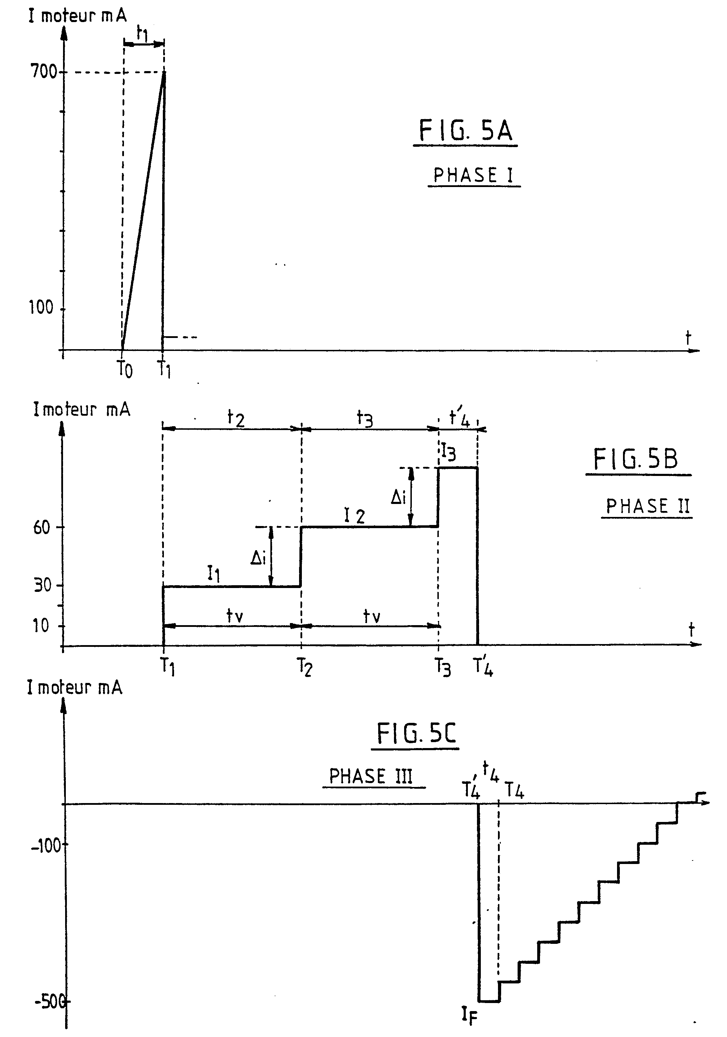

La came CAM présente un profil qu'on voit plus en détail à la figure 4. Ce profil comprend trois parties, à savoir deux segments de droite $S_1$ et $S_2$ séparés par un arc de cercle AB centré sur l'axe de rotation ($\Delta$) de l'actionneur rotatif. Le segment de droite $S_1$ est séparé de l'arc de cercle AB par un premier point de rupture de pente A alors que l'arc de cercle AB et le second segment de droite $S_2$ sont séparés par un second point de rupture de pente B.

Dans la pratique, le poussoir P qui est en contact avec le profil de la came, ainsi qu'il est représenté à la figure 4, se déplace le long de celle-ci entre les points A' et C.

Ainsi donc, lors d'une opération de déplacement et de chargement de la tête T par le système de chargement SCT, le poussoir P se déplacera successivement sur les parties de profil A'A, AB et BC.

Il est clair qu'à l'inverse, lors d'une opération de retour de la tête T en position de repos, le poussoir se déplacera successivement sur les portions de profil CB, BA, AA'.

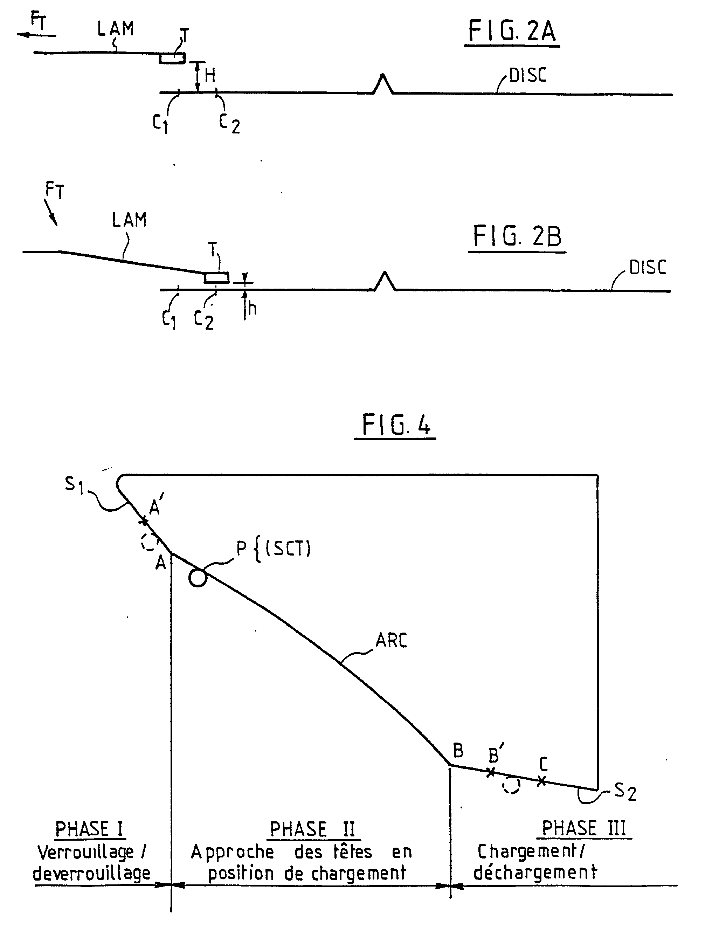

Ainsi qu'il a été écrit plus haut, les opérations de déplacement et de chargement de la tête T sur le disque DISC (voir figures 1 et 2) s'effectuent, selon trois phases successives:
- 1. Phase 1: Déverrouillage:
Initialement, le poussoir étant en position A', le système SCT est immobilisé (verrouillé). Pour permettre le chargement de la tête T, on déverrouille le système SCT en envoyant un courant dans le moteur électrodynamique rotatif ACRO. Le poussoir P se déplace alors sur le segment $S_1$ entre les points A' et A. Lors de cette phase, la tête T est disposée à l'extérieur du disque DISC, à une hauteur H au-dessus du plan du disque DISC. Dès que le poussoir P a atteint le premier point de rupture de pente A, commence la seconde phase décrite ci-après.
- 2. Phase 2: Approche des têtes en position de chargement.
Dans cette phase le poussoir P se déplace du premier point de rupture de pente A au second point de rupture de pente B en empruntant la deuxième partie du profil de la came CAM, à savoir l'arc de cercle AB. Durant cette phase, la tête T, est amenée de la position qu'elle occupait à l'extérieur du disque durant la phase de verrouillage à une position située au-dessus du disque, en regard du cercle $C_1$ (voir figures 1A, 1B et 2) situé à la périphérie du disque DISC. Durant cette phase d'approche des têtes, la tête T se déplace parallèlement au plan du disque DISC, c'est-à-dire qu'elle reste à une distance H du plan du disque. Aussi bien durant la phase 1 que durant la phase 2, la position du poussoir P est telle que la lame ressort LRS exerce une poussée sur le fil F lequel à son tour exerce un effort de traction $F_T$ (voir figure 2A) sur la lame de chargement LAM qui maintient ainsi la tête T à une hauteur H du plan du disque DISC. Dès que le poussoir P a franchi le second point de rupture de pente B on aborde la phase 3.
- 3. Phase 3: Chargement proprement dit.
Le poussoir se déplace du second point de rupture B au point C sur le second segment de droite $S_2$. La lame ressort LRS s'éloigne du bord du bras support BS, de telle sorte que le fil F relache son effort de traction $F_T$ sur la lame de charge LAM, ce qui provoque l'abaissement de celle-ci vers le disque DISC. Cela provoque le chargement de la tête T sur le disque DISC, la distance entre la face inférieure de la tête T et le disque DISC étant alors égale à h, hauteur de vol de l'ordre de quelques dixièmes de microns (figure 2B), le poussoir P ayant quitté la surface $S_2$ de la came. La tête est alors en regard du cercle $C_2$ (figures 1A et 1B).

Ainsi qu'il a été dit plus haut, on admettra, que le système SCT est un système mobile se déplaçant suivant une trajectoire A'ABC. Ce système mobile est soumis, lors du parcours de la trajectoire A'ABC, à des efforts résistants qui, ainsi qu'il a été dit plus haut,
- restent constants pour un même parcours de la trajectoire A'ABC et peuvent varier d'un parcours de la trajectoire à l'autre (que ce soit pour une même mémoire à disques ou pour des mémoires différentes).

Il en résulte, par exemple, qu'en déplaçant le système SCT au moyen d'un courant de commande dans le moteur électrodynamique rotatif ayant une intensité et une durée données, assurant à ce système des conditions de déplacement correctes, (à savoir déplacement dans le minimum de temps, chargement de la tête T avec une vitesse comprise entre deux valeurs prédéterminées données lui permettant de se placer à l'altitude de vol requise sans toucher le disque), dans des conditions d'environnement données, il se peut que le même courant de commande, dans d'autres conditions d'environnement, ne permette pas un déplacement correct des têtes. Par exemple, il se peut alors que le temps de déplacement soit trop court, les têtes risquant de venir percuter le disque, ou bien encore il se peut que la tête soit chargée sur le disque avec une vitesse trop faible, ce qui provoque une oscillation du système de déplacement (voir plus haut).

L'invention concerne un procédé pour déplacer un système mobile solidaire d'un moteur électrique suivant une trajectoire donnée (BC), remédiant aux inconvénients mentionnés ci-dessus en déplaçant le mobile selon la phase 3 du mouvement dans les meilleurs conditions (temps minimum, assurance que le point d'arrivée est atteint avec une vitesse comprise entre deux valeurs prédéterminées), quelles que soient les conditions d'environnement.

Afin de mieux comprendre le contexte dans lequel opère le procédé selon l'invention, il est plus clair de le décrire au sein d'une description plus détaillée que ci-dessus des trois phases du déplacement et du chargement de la tête T.

A. Phase 1: (illustrée par la figure 5A): On envoie dans l'induit du moteur électrodynamique rotatif un courant sous forme de rampe, dont l'intensité croît linéairement en fonction du temps. Durant cette phase on vérifie en permanence si le système mobile constitué par le système SCT passe au point A. Un mode de détection préféré du passage du système mobile au point A sera décrit plus loin. Ce mode de détection est identique au mode de détection du passage du système mobile au point B. La rampe de courant débute à l'instant $T_0$ et se termine à l'instant $T_1$ où l'on a détecté le passage du système mobile au point A. L'intervalle de temps $T_1 - T_0$ est par exemple de l'ordre de 25 à 30 millisecondes, alors qu'entre les instants $T_0$ et $T_1$, l'intensité de courant varie linéairement de 0 à quelques centaines de milliampères (700 milliampères à la figure 5A). A l'instant $T_1$, on passe à la seconde phase correspondant à la mise en oeuvre du procédé selon l'invention.

B. Phase 2: (illustrée par la figure 5B) : A l'instant $T_1$ on envoie une impulsion de courant $I_1$ (par exemple d'intensité égale à 30 milliampères). Cette impulsion a une durée maximale appelée temps de validation $t_v$ et qui dans l'exemple de réalisation indiqué est de l'ordre de deux secondes. Pendant l'application de cette impulsion $t_v$ on vérifie si le mobile passe au point B. Si cela est le cas, on passe immédiatement à la phase 3. Si le mobile n est pas passé au point B à la fin du temps de validation $t_v$, c'est-à-dire à l'instant $T_2$ avec $(T_2 - T_1) = t_v$, on envoie une seconde impulsion de courant $I_2$. Si $i_2$ est l'intensité de l'impulsion $I_2$ et $i_1$, l'intensité de l'impulsion $I_1$, les intensités $i_1$ et $i_2$ sont choisies par exemple, de telle façon que $i_2 - i_1 = \Delta i$. $\Delta i$ est appelé incrément de courant. Pendant l'application de l'impulsion de courant $I_2$ dans l'induit du moteur ACRO, on vérifie si le mobile est passé au point B (le mode de détection du passage au point B sera exposé plus loin). Si le mobile est parvenu au point B, on passe immédiatement à la phase 3 alors que, si le mobile n'est pas passé au point B à l'instant $T_3$, tel que $T_3 - T_2 = t_v$, on applique une troisième impulsion de courant $I_3$ d'intensité $i_3$, telle que par exemple:

$$(i_3 - i_2) = \Delta i.$$

On vérifie à nouveau, pendant la durée de l'impulsion 13 si le mobile passe au point B. On suppose que le mobile parvient au point B à l'instant T'4 avec $(T'_4 - T_3) < t_v$. Le temps $t_v$ est calculé de la manière suivante:
- on sait que le mobile doit parvenir au point B avec une vitesse comprise entre deux valeurs $V_1$ et $V_2$, où $V_1 < V_2$. Si L est la longueur de l'arc ARC, le temps de validation $t_v$ est tel que:

$$t_V = L/V1$$

La valeur de $\Delta i$ est établie expérimentalement et dépend de la vitesse maximum $V_2$ (si $\Delta i$ trop important, la vitesse du système mobile risque de dépasser $V_2$ au point de rupture de pente B).

Il est clair que les valeurs de $V_1$ et $V_2$ sont déterminées expérimentalement.

On voit que durant la phase 2, on incrémente le courant par pas successifs d'une durée de validation $t_V$, ce qui revient à dire qu'on incrémente la vitesse du système mobile par pas successifs d'une même durée de validation. A la figure 5B, les impulsions de courant ont été arbitrairement supposées positives. On passe ensuite à la phase 3.

C. Phase 3: (illustrée par la figure 5C): On sait que durant cette phase, qui concerne le procédé selon l'invention, le système mobile est soumis, à partir du second point de rupture de pente B, à une force motrice provoquée par la réaction de la came sur le poussoir, force motrice qui provoque une brusque accélération du système mobile au point B. Cette force mobile décroît en fonction de la distance du système mobile par rapport au point B. Cette brusque accélération peut, suivant les conditions d'environnement, de la tête T, donner à la vitesse de la tête T une valeur excessive telle que celle-ci vienne percuter le disque. C'est la raison pour laquelle il est nécessaire de contrôler le mouvement du système mobile pendant cette phase 3.

Pour ce faire, il est nécessaire de donner d'abord au système mobile une vitesse de référence de départ parfaitement connue. En effet, du fait que:

1. au passage au point B, la vitesse du système SCT est comprise entre les deux valeurs $V_1$ et $V_2$,

2. immédiatement après avoir passé le point B, le système mobile subit une brusque accélération, la vitesse du mobile y est alors absolument quelconque et difficile à déterminer. On comprend donc que, dans ces conditions, tout contrôle du mouvement du système serait aléatoire.

C'est pourquoi, selon l'invention, on choisit de donner à celui-ci une vitesse de référence de départ, qui, de préférence est choisie nulle.

Pour cela, on envoie à l'instant $T'_4$ une impulsion de courant dans l'induit du moteur, de sens opposé aux impulsions $I_1$, $I_2$, $I_3$, c'est-à-dire négative dans l'exemple de réalisation choisi, dont l'intensité et la durée sont choisies de telle façon que le système mobile est immobilisé à l'instant $T_4$ tel que $T_4 - T'_4 = t_4$. Ce temps $t_4$ est de l'ordre de quelques dizaines de millisecondes. Soit $I_F$ cette impulsion de freinage. Son intensité a été calculée de telle sorte qu'elle permette l'immobilisation du système mobile, lorsque celui-ci a une accélération maximale au point B.

Cette accélération maximale est déterminée expérimentalement.

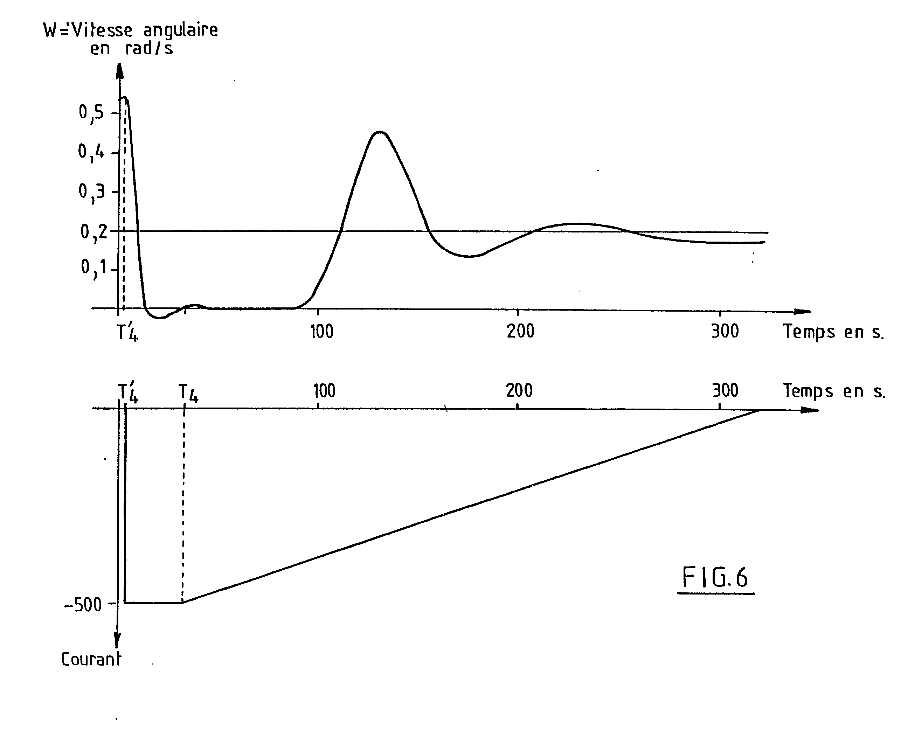

La durée $t_4$ a été choisie de telle sorte que, l'accélération au point B étant supposée maximum (c'est-à-dire la force motrice due à la réaction de la came sur le poussoir étant supposée maximum), l'intensité étant choisie égale à celle déterminée précédemment (par exemple de l'ordre de 500 milliampères), le système est immobilisé sans oscillations résiduelles on peut donc dire que la durée $t_4$ correspond à la durée du régime transitoire pendant lequel la vitesse angulaire $\omega$ du système de chargement de tête passe de la valeur qu'elle avait juste avant l'application de l'impulsion de freinage, à une valeur nulle (voir figure 6). Lorsque le système mobile est immobilisé, il est en équilibre sous l'action d'une part de la force motrice due à la réaction de la came sur le poussoir, et d'autre part du couple résistant exercé par le moteur et des forces de frottement.

A l'instant $T_4$, on applique à l'induit du moteur un courant décroissant linéairement (en valeur absolue) en fonction du temps de la manière indiquée par exemple aux figures 5C et 6, la durée de cette rampe de courant décroissant étant de l'ordre de 200 à 300 millisecondes. L'obtention de cette rampe peut se faire, par exemple, par une succession d'une dizaine de paliers, la durée de chaque palier étant de l'ordre de 20 millisecondes. L'allure de la vitesse angulaire est alors celle indiquée à la figure 6. Au bout d'un certain temps la vitesse se stabilise et reste sensiblement constante jusqu'à ce que le mobile parvienne au point C. Après le dernier palier où le courant est nul dans l'induit du moteur, on envoie une impulsion de courant positive de faible durée de telle façon que le système de chargement de tête atteigne une position prédéterminée, point limite de sa trajectoire au-delà de laquelle il ne peut se déplacer (par construction).

Pour détecter le passage du système mobile aussi bien au point A, qu'au point B, on mesure la variation d'accélération du système mobile. Ceci est obtenu en mesurant puis en différentiant la force contre-électromotrice du moteur électrodynamique linéaire. En effet, on sait que la force contre-électromotrice du moteur électrodynamique linéaire e est de la forme e = -kV, où V est la vitesse linéaire du système mobile et k une constante. Si l'on différentie la force contre électromotrice e on obtient:

de/dt -kdV/dt = - k$\gamma$ où $\gamma$ est l'accélération linéaire du système mobile.

Pour détecter le passage aux points A et B, il suffit donc:

a) de mesurer la tension aux bornes de l'induit du moteur électrodynamique, égale à la force contre électromotrice du moteur,

b) de différentier la tension mesurée,

c) de la comparer avec une valeur de seuil déterminée.

La valeur de seuil est déterminée expérimentalement, de telle façon qu'elle soit sensiblement plus grande que l'accélération moyenne calculée aussi bien sur le parcours A'A (pour détecter le passage au point A) que sur le parcours AB (pour détecter le passage au point B).

Les variations d'accélération aux points A et B étant à priori différentes, les valeurs des seuils pour détecter le passage du système mobile aux points A et B sont généralement différentes.

En d'autres termes, il y a deux seuils généralement différents: un pour le parcours A'A, l'autre pour le parcours AB. On voit que, en repérant le passage du système mobile aux points A et B par détection de l'accélération du système en mesurant la force contre électromotrice aux bornes du moteur puis en la différentiant, on s'affranchit d'un système de détection utilisant des capteurs extérieurs au système mobile, par exemple des capteurs optoélectroniques associés à leur dispositif d'amplification.

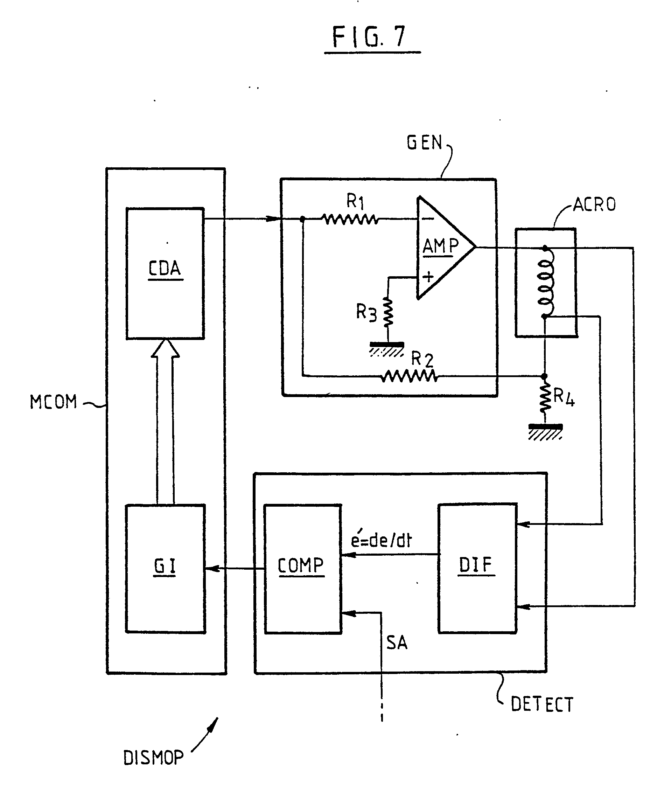

Le dispositif commandant le déplacement du système SCT selon les phases 1, 2 et 3 et mettant par conséquent en oeuvre le procédé selon l'invention, est montré à la figure 7.

Ce dispositif DISMOP comprend:

- le générateur de courant alimentant l'induit du moteur ACRO, à savoir le générateur GEN,

- des moyens de commande du générateur de courant GEN, à savoir les moyens MCOM,

les moyens DETECT de détection du passage du système mobile aux points B et A.

Le générateur GEN comprend l'amplificateur AMP et les trois résistances $R_1$, $R_2$, $R_3$.

La résistance $R_3$ relie l'entrée positive de l'amplificateur à la masse, alors que la résistance $R_1$ relie la sortie des moyens de commande MCOM à l'entrée négative de l'amplificateur AMP, la résistance $R_2$ reliant l'entrée du générateur GEN à une des bornes de l'induit du moteur ACRO, cette même borne étant connectée par l'intermédiaire d'une résistance $R_4$ à la masse. La sortie de AMP est reliée à l'autre borne de l'induit de ACRO.

Ce générateur GEN transforme les impulsions de tension qu'il reçoit des moyens de commande MCOM en impulsions de courant telles que celles qui sont représentées aux figures 5A, 5B et 5C.

Les moyens de commande MCOM comprennent, un générateur d'instructions GI délivrant des instructions sous forme binaire à un convertisseur digital analogique CDA.

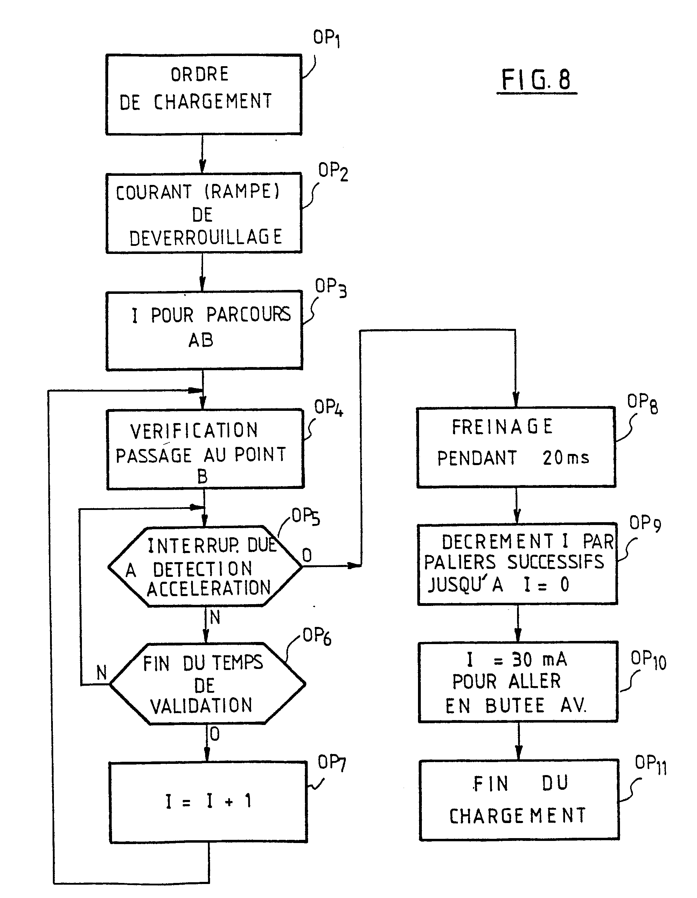

Le générateur d'instructions GI, dans un mode de réalisation préféré de l'invention est un microprocesseur contenant un microprogramme délivrant une suite d'instructions binaires au convertisseur digital analogique CDA, suivant un algorithme qui est représenté à la figure 8. A chaque valeur binaire envoyée par le générateur d'instructions GI au convertisseur digital analogique CDA correspond, à la sortie de ce dernier, une impulsion de tension, transformée en impulsion de courant par le générateur GEN.

Les différentes opérations commandées par le générateur d'instructions, suivant l'algorithme de la figure 8 sont les suivantes. Elles sont dénommées $OP_1$ à $OP_{11}$.

- Opération $OP_1$: On donne l'ordre de chargement de la tête T.

- Opération $OP_2$: Une fois l'ordre de chargement donné, on envoie la rampe de courant de déverrouillage (voir figure 5A), et on vérifie si le système mobile n'est pas passé au point A, par l'intermédiaire des moyens de détection DETECT.

- Opération $OP_3$: Lorsque le système mobile est passé au point A, on envoie une première impulsion de courant $I_1$, (voir figure 5B) dans l'induit du moteur ACRO.

- Opération $OP_4$: On vérifie pendant un temps égal au maximum à la durée du temps de validation $t_v$, si le système mobile passe au point B.

- Opération $OP_5$: On se demande s'il faut interrompre l'alimentation de l'induit du moteur ACRO. Si on détecte le passage du système mobile au point B, la réponse est oui et on passe à l'opération $OP_8$, sinon on passe à l'opération $OP_6$.

- Opération $OP_6$: On vérifie si la durée de l'impulsion $I_1$ est égale au temps de validation $t_v$ (voir figure 5B).

Si la réponse est non, on revient à l'opération $OP_5$, alors que si la réponse est oui on passe à l'opération $OP_7$.

- Opération $OP_7$: On alimente le moteur avec une impulsion de courant $I_2$ et on revient à l'opération $OP_4$.

- Opération $OP_8$: On envoie une impulsion de freinage (voir figure 5C) pendant une durée $t_4$ et on passe ensuite à l'opération $OP_9$ quand le temps $t_4$ s'est écoulé.

- Opération $OP_9$: On envoie un courant décroissant par paliers successifs, jusqu'à une valeur nulle et ce pendant un temps donné compris entre 200 et 300 millisecondes, jusquà ce qu'on ait atteint le palier de courant où celui-ci a une intensité nulle. On passe alors à l'opération $OP_{10}$.

- Opération $OP_{10}$: On envoie une impulsion de courant I, positive, par exemple égale à 30 milliampères dans l'induit du moteur jusqu'à ce que le système mobile parvienne à son point limite (encore appelé butée avant). Lorsque l'on est parvenu en ce point, on passe à l'opération $OP_{11}$.

- Opération $OP_{11}$: On donne l'ordre de fin de chargement.

Les moyens de détection DETECT du passage du système mobile soit au point A, soit au point B (on rappelle que le mode de détection en ces deux points est identique) comprennent:
- des moyens de différentiation DIF,
- un comparateur COMP.

Les moyens de différentiation DIF différentient la force contre électromotrice e prise aux bornes de l'induit du moteur ACRO. Cette valeur différentiée e' = de/dt est comparée avec une valeur de seuil SA dans un comparateur COMP. Ce comparateur envoie une valeur linéaire, 0 au générateur d'instructions GI, tant que l'accélération reste inférieure au seuil SA, et envoie une valeur binaire égale à 1 lorsque l'accélération a dépassé ce seuil SA, c'est-à-dire lorsque le système mobile est passé soit au point A soit au point B.

**Revendications**

1. Procédé pour déplacer un système mobile (SCT) solidaire d'un moteur électrique (ACRO) suivant une trajectoire donnée (BC) d'un point de départ (B) où la vitesse est quelconque à un point de destination donné (C) de celle-ci, le système mobile (SCT) étant soumis, d'une part à une force motrice dont l'intensité décroît en fonction de la distance du système par rapport au point de départ et d'autre part à des efforts résistants constants pendant la durée d'un même déplacement le long de la trajectoire mais pouvant varier sensiblement d'un parcours de la trajectoire à l'autre, caractérisé en ce que, dans le but de conduire le système mobile (SCT) au point de destination (C) où la vitesse est comprise entre deux valeurs prédéterminées, on réalise successivement les opérations suivantes:

a) On envoie un courant de commande dans le moteur de manière à donner une vitesse de référence déterminée au système mobile,

b) On contrôle ensuite la vitesse du système mobile par envoi d'un courant dans le moteur décroissant (en valeur absolue) à partir de la valeur du courant de commande suivant une loi telle que le mobile arrive au point de destination avec une vitesse comprise entre les deux valeurs prédéterminées.

2. Procédé suivant la revendication 1, caractérisé en ce que le courant de commande est un courant de freinage permettant d'obtenir une vitesse de référence nulle.

3. Procédé selon la revendication 2, dans lequel le moteur est un moteur électrodynamique, caractérisé en ce que l'immobilisation du système est obtenue en envoyant dans le moteur une impulsion de courant dont le sens permet au moteur d'exercer un effort résistant de sens opposé à la force motrice et dont l'amplitude est fonction de l'intensité de la force motrice maximale initiale et dont la durée est fonction de celle du régime transitoire nécessaire à l'immobilisation du système mobile.

4. Procédé selon la revendication 2 caractérisé en ce que la décroissance du courant dans le moteur permettant la remise en mouvement s'effectue par décrémentations successives jusqu'à une valeur nulle, la décroissance moyenne étant linéaire.

5. Dispositif pour déplacer un système mobile (SCT) mu par un moteur électrique (ACRO) suivant une trajectoire donnée (BC) vers un point de destination donné de celle-ci (C), suivant le procédé de la revendication 1, le moteur étant alimenté par des moyens d'alimentation en tension/ou courant (GEN) caractérisé en ce que, le dispositif comprend:

des moyens de commande (MCOM) des moyens d'alimentation (GEN) permettant de réaliser successivement les opérations a et b;

6. Dispositif selon la revendication 4, caractérisé en ce que, le moteur (ACRO) étant électrodynamique, les moyens de commande mettent en oeuvre le procédé selon la revendication 2.

7. Dispositif selon la revendication 4, caractérisé en ce que, le moteur (ACRO) étant électodynamique, les moyens de commande (MCOM) mettent en oeuvre le procédé selon la revendication 3.

8. Dispositif selon la revendication 4 caractérisé en ce que, le moteur (ACRO) étant électrodynamique, les moyens de commande (MCOM) mettent en oeuvre successivement le procédé selon les revendications 2 et 3.

9. Dispositif selon les revendications 4, ou 5, ou 6, ou 7 caractérisé en ce que les moyens de commande sont constitués par un microprocesseur commandant un convertisseur digital-analogique dont la sortie est connectée aux moyens d'alimentation (GEN).

**Patentansprüche**

1. Verfahren zum Verschieben eines fest mit einem elektrischen Motor (ACRO) verbundenen beweglichen Systems (SCT) längs einer gegebenen Bahn (BC) von einem Startpunkt (B), an dem die Geschwindigkeit beliebig ist, zu einem gegebenen Bestimmungspunkt (C) des Systems, wobei das bewegliche System (SCT) einerseits einer Antriebskraft ausgesetzt ist, deren Stärke in Abhängigkeit vom Abstand des Systems von dem Startpunkt abnimmt, und andererseits Widerstandskräften ausgesetzt ist, die während der Dauer einer solchen Verschiebung längs der Bahn konstant sind, sich im Verlauf eines Übergangs von einer Bahn zu einer anderen jedoch merklich ändern kann, dadurch gekennzeichnet, daß zum Führen des beweglichen Systems (SCT) zum Bestimmungspunkt (C), bei dem die Geschwindigkeit zwischen zwei vorbestimmten Werten liegt, nacheinander folgende Operationen ausgeführt werden:

a) in den Motor wird ein solcher Steuerstrom geschickt, daß dem beweglichen System eine bestimmte Bezugsgeschwindigkeit verliehen wird,

b) anschließend wird die Geschwindigkeit des beweglichen Systems gesteuert, indem dem Motor ein Strom zugeführt wird, der (dem Absolutwert nach) ausgehend von dem Wert des Steuerstroms entsprechend einem solchen Gesetz abnimmt, daß der bewegliche Teil am Bestimmungspunkt mit einer zwischen den zwei Vorbestimmten Werten liegenden Geschwindigkeit ankommt.

2. Verfahren nach Anspruch 1, dadurch gekennzeichnet, daß der Steuerstrom ein Bremsstrom ist, der es ermöglicht, eine Bezugsgeschwindigkeit mit dem Wert Null zu erhalten.

3. Verfahren nach Anspruch 2, bei welchem der Motor ein elektrodynamischer Motor ist, dadurch gekennzeichnet, daß die Stillsetzung des Systems dadurch erhalten wird, daß in den Motor ein Stromimpuls geschickt wird, dessen Richtung es dem Motor ermöglicht, eine Widerstandskraft mit einer zur Antriebskraft entgegengesetzten Richtung auszuüben, wobei die Amplitude des Stromimpulses von der Stärke der anfänglichen maximalen Antriebskraft abhängt, während seine Dauer von der des zum Stillsetzen des beweglichen Systems notwendigen Übergangsbereichs abhängt.

4. Verfahren nach Anspruch 2, dadurch gekennzeichnet, daß die Abnahme des die Inbewegungsetzung des Motors gestattenden Stroms durch aufeinanderfolgende Abnahmen bis zu einem Wert Null erfolgt, wobei die mittlere Abnahme linear ist.

5. Anordnung zum Verschieben eines beweglichen Systems (SCT) , das durch einen elektrischen Motor (ACRO) längs einer gegebenen Bahn (BC) zu einem gegebenen Bestimmungspunkt (C) des Systems angetrieben wird, gemäß dem Verfahren nach Anspruch 1, wobei der Motor mit Hilfe von Spannungs-oder Stromversorgungsmitteln (GEN) gespeist wird, dadurch gekennzeichnet, daß die Anordnung folgendes enthält:

- Steuermittel (MCOM) zum Steuern der Spannungs- oder Stromversorgungsmittel (GEN), die die aufeinanderfolgende Verwirklichung der Operationen a und b gestatten;

6. Anordnung nach Anspruch 4, dadurch gekennzeichnet, daß der Motor (ACRO) ein elektrodynamischer Motor ist, wobei die Steuermittel das Verfahren gemäß Anspruch 2 durchführen.

7. Anordnung nach Anspruch 4, dadurch gekennzeichnet, daß der Motor (ACRO) ein elektrodynamischer Motor ist, wobei die Steuermittel (MCOM) das Verfahren gemäß Anspruch 3 durchführen.

8. Anordnung nach Anspruch 4, dadurch gekennzeichnet, daß der Motor (ACRO) ein elektrodynamischer Motor ist, wobei die Steuermittel (MCOM) nacheinander das Verfahren gemäß den Ansprüchen 2 und 3 durchführen.

9. Anordnung nach den Ansprüchen 4 oder 5 oder 6 oder 7, dadurch gekennzeichnet, daß die Steuermittel von einem Mikroprozessor gebildet sind, der einen Digital-Analog-Umsetzer steuert, dessen Ausgang mit den Spannungs- oder Stromversorgungsmitteln (GEN) verbunden ist.

## Claims

1. Method for displacing a mobile system (SCT) in unit with an electric motor (ACRO) along a given trajectory (BC) from a starting point (B) at which the speed is immaterial to a given destination point (C) for the same, the mobile system (SCT) being exposed on the one hand to a motive force the strength of which decreases as a function of the distance of the system from the starting point and on the other hand to constant resistant forces during the period of the same displacement along the trajectory but apt to vary appreciably from one traversal of the trajectory to another, characterised in that for the purpose of conveying the mobile system (SCT) to the destination point (C) at which the speed lies between two predetermined values, the following operations are implemented successively:

a) a control current is fed into the motor in such manner as to impart a definite reference speed to the mobile system,

b) the speed of the mobile system is thereupon controlled by feeding a current into the motor, which decreases (in absolute value) from the value of the control current in accordance with a law such that the mobile system reaches the destination point at a speed lying between the two predetermined values.

2. Method according to claim 1, characterised in that the control current is a damping current allowing a zero reference speed to be obtained.

3. Method according to claim 2, in which the motor is an electrodynamic motor, characterised in that the immobilisation of the system is obtained by supplying the motor with a current surge the direction of which enables the motor to exercise a resistant force of opposite direction to that of the motive force and the amplitude of which is a function of the intensity of the maximum initial motive force and the period of which is a function of that of the transitory state required for immobilisation of the mobile system.

4. Method according to claim 2, characterised in that the decrease of the current in the motor allowing motion to be restored is performed by successive decrementations down to a zero value, the mean decrease being linear.

5. Device for displacing a mobile system (SCT) moved by an electric motor (ACRO) along a given trajectory (BC) towards a given point of destination (C) for the same, according to the method of claim 1, the motor being supplied via voltage or current supply means (GEN), characterised in that the device comprises;

- means (MCOM) for controlling the supply means (GEN), allowing the operations a and b to be performed successively.

6. Device according to claim 4, characterised in that, the motor (ACRO) being electrodynamic, the control means put the method according to claim 2 into operation.

7. Device according to claim 4, characterised in that, the motor (ACRO) being electrodynamic, the control means (MCOM) put the method according to claim 3 into operation.

8. Device according to claim 4, characterised in that, the motor (ACRO) being electrodynamic, the control means (MCOM) put the method according to claims 2 and 3 into operation successively.

9. Device according to claims 4 or 5 or 6 or 7, characterised in that the control means are formed by a microprocessor controlling a digital-analog transducer the output of which is connected to the supply means (GEN).

FIG. 1A

FIG. 1B.

FIG. 2A

$F_T$

LAM

T

H

DISC

$C_1$   $C_2$

FIG. 2B

$F_T$

LAM

T

h

DISC

$C_1$   $C_2$

FIG. 4

$S_1$

A'

A

P { (SCT)

ARC

B   B'   C

$S_2$

| PHASE I | PHASE II | PHASE III |
|---|---|---|
| Verrouillage / deverrouillage | Approche des têtes en position de chargement | Chargement/ déchargement |

FIG. 3

**FIG. 5A**

PHASE I

**FIG. 5B**

PHASE II

**FIG. 5C**

PHASE III

FIG.6

# FIG. 7

FIG. 8

$OP_1$ ORDRE DE CHARGEMENT

$OP_2$ COURANT (RAMPE) DE DEVERROUILLAGE

$OP_3$ I POUR PARCOURS AB

$OP_4$ VERIFICATION PASSAGE AU POINT B

$OP_5$ INTERRUP. DUE A DETECTION ACCELERATION

$OP_6$ FIN DU TEMPS DE VALIDATION

$OP_7$ I = I + 1

$OP_8$ FREINAGE PENDANT 20 ms

$OP_9$ DECREMENT I PAR PALIERS SUCCESSIFS JUSQU'A I = 0

$OP_{10}$ I = 30 mA POUR ALLER EN BUTEE AV.

$OP_{11}$ FIN DU CHARGEMENT